# DEMANDE DE BREVET EUROPEEN

(11) **EP 0 922 619 A1**
(43) Date de publication de la demande: **16.06.1999**
(21) Numéro de dépôt: 98450019.9
(22) Date de dépôt: 11.12.1998
(51) Int. Cl.: B60T 8/26

(54) **Régulateur de pression pour circuit hydraulique, et dispositif de freinage équipé dudit régulateur**

(30) Priorité: 11.12.1997 FR 9715682
(71) Demandeur: Amalco SA, 31360 Saint Martory (FR)
(72) Inventeur: Cauquil, Thierry, 31100 Toulouse (FR)
(74) Mandataire: Thébault, Jean-Louis

(57) **Abrégé**

L'objet de l'invention est un régulateur de pression pour circuit hydraulique, utilisé notamment dans les dispositifs de freinage de véhicules à deux-roues, caractérisé en ce qu'il comprend un alésage (42) de forme cylindrique, un piston (34) qui est susceptible de coulisser dans l'alésage (42) en délimitant une première chambre (32) et qui comprend un conduit (72) débouchant d'une part sur la face (70) orientée vers la chambre (32) et d'autre part sur le flanc du piston (34), un conduit d'arrivée (48) de fluide qui débouche dans ladite chambre (32), un conduit de sortie (60) de fluide qui débouche dans le flanc dudit alésage (42) sensiblement au droit du piston (34), le piston (34) étant susceptible d'osciller entre deux positions en fonction de la pression du fluide à l'intérieur de la chambre (32), une première position dite passante, lorsque ladite pression est inférieure à une pression de seuil, dans laquelle le conduit (72) communique avec le conduit de sortie (60), et une seconde position dite régulée, lorsque la pression du fluide atteint ladite pression de seuil, qui engendre une augmentation du volume de la chambre (32), et dans laquelle le conduit (72) communique par un étranglement (77) avec le conduit de sortie (60), des moyens (78) de rappel étant prévus afin de maintenir le piston (34) en position passante.

## Description

La présente invention a pour objet un régulateur de pression pour circuit hydraulique, et un dispositif de freinage, notamment pour véhicules à deux-roues, équipé dudit régulateur.

Les systèmes de freinage des véhicules à deux-roues sont constitués en général, de moyens de commande reliés par un flexible à des moyens de freinage proprement dits, disposés au niveau d'au moins une roue.

Les moyens de commande comprennent une poignée de frein, et un maître cylindre qui sert de réservoir pour le fluide hydraulique, alors que les moyens de freinage comprennent, par exemple, pour chaque roue, un étrier de frein muni de plaquettes disposées de part et d'autre d'un disque lié à la roue.

De tels dispositifs de freinage, de conception relativement simple ne donnent pas, toutefois, pleinement satisfaction au niveau de la sécurité, car un freinage brusque peut entraîner un blocage de la roue et la chute du conducteur, si le conducteur n'est pas un pilote confirmé.

En effet, comme pour les véhicules automobiles, un freinage violent entraîne en général un blocage de la roue, liée aux moyens de freinage, qui perd alors toute adhérence et glisse sur la chaussée. Pour obtenir un freinage efficace, il faut que le pilote relâche la commande de frein afin que la roue ne soit plus bloquée et adhère de nouveau à la chaussée. Dès lors, le conducteur peut de nouveau actionner la commande de frein.

Ainsi, pour obtenir un freinage efficace, il faut successivement actionner et relâcher la commande de freinage. Seul un pilote confirmé peut freiner de la sorte.

Les systèmes de freinage des véhicules automobiles et des motos sont souvent équipés de moyens anti-blocage de roue, appelés A.B.S, qui permettent de relâcher automatiquement l'action de freinage dès que la roue se bloque, afin d'obtenir un freinage sûr.

Toutefois, les dispositifs A.B.S adaptés aux véhicules à deux-roues sont non satisfaisants en raison de leur encombrement, de leur poids, et de leur relative complexité.

Ces dispositifs A.B.S comprennent en général des capteurs de pression, et des moyens de commande électroniques qui régulent la pression du fluide hydraulique dans l'organe de freinage, afin d'éviter tout blocage de roue. Ces dispositifs, d'un coût relativement élevé, ne sont pas réellement adaptés aux véhicules à deux-roues qui comprennent une source en énergie électrique insuffisante pour alimenter de tels dispositifs, dans le cas des petites cylindrées.

La présente invention propose donc un régulateur de pression pour dispositif de freinage, adapté aux véhicules à deux-roues, efficace, relativement simple, fiable, et le dispositif de freinage équipé dudit régulateur assurant un freinage sûr et limitant le phénomène de blocage de roue.

A cet effet, l'invention a pour objet un régulateur de pression pour circuit hydraulique, utilisé notamment dans les dispositifs de freinage de véhicules à deux-roues, caractérisé en ce qu'il comprend un alésage de forme cylindrique, un piston qui est susceptible de coulisser dans l'alésage en délimitant une première chambre et qui comprend un conduit débouchant d'une part sur la face orientée vers la chambre et d'autre part sur le flanc du piston, un conduit d'arrivée de fluide qui débouche dans ladite chambre, un conduit de sortie de fluide qui débouche dans le flanc dudit alésage sensiblement au droit du piston, le piston étant susceptible d'osciller entre deux positions en fonction de la pression du fluide à l'intérieur de la chambre, une première position dite passante, lorsque ladite pression est inférieure à une pression de seuil, dans laquelle le conduit communique avec le conduit de sortie, et une seconde position dite régulée, lorsque la pression du fluide atteint ladite pression de seuil, qui engendre une augmentation du volume de la chambre, et dans laquelle le conduit communique par un étranglement avec le conduit de sortie, des moyens de rappel étant prévus afin de maintenir le piston en position passante.

De préférence, le régulateur comprend des moyens de réglage de la pression de seuil.

Selon un mode de réalisation préféré, les moyens de rappel comprennent un ressort interposé entre le piston et une vis de tarage, et ladite vis de tarage en comprimant plus ou moins le ressort constitue les moyens de réglage de la pression de seuil.

L'invention a également pour objet un dispositif de freinage d'un véhicule à deux-roues équipé du régulateur de pression de l'invention, comprenant des moyens de commande reliés à des moyens de freinage disposés au niveau d'au moins une roue par un circuit hydraulique, caractérisé en ce que le régulateur de pression est disposé entre les moyens de commande et les moyens de freinage.

De préférence, le régulateur de pression comprend des moyens de connexion pour relier de façon étanche le conduit de sortie directement aux moyens de freinage et des moyens de connexion pour relier de façon étanche le conduit d'arrivée au circuit hydraulique.

D'autres caractéristiques et avantages ressortiront de la description qui va suivre, donnée à titre d'exemple uniquement, et en regard des dessins annexés sur lesquels:
- la figure 1 est une vue générale montrant un dispositif de freinage selon l'invention,
- la figure 2 est une vue en coupe longitudinale d'un régulateur de pression selon l'invention en position passante, et
- la figure 3 est une vue en coupe longitudinale d'un régulateur de pression en position régulée.

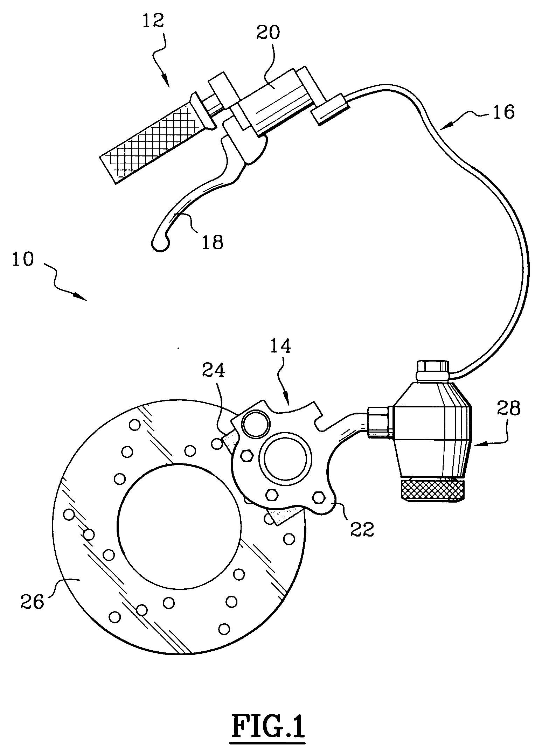

Un dispositif 10 de freinage pour véhicule à deux-roues selon l'invention est représenté sur la figure 1. De façon connue, il comprend des moyens 12 de commande reliés à des moyens 14 de freinage proprement dits, disposés au niveau d'au moins une roue, par un circuit hydraulique 16, par exemple un flexible. Bien entendu, chaque roue peut être équipée de moyens de freinage indépendants, un répartiteur, non représenté, est alors disposé entre les moyens de commande et les différents moyens de freinage.

Les moyens 12 de commande, disposés au niveau d'une poignée du guidon du véhicule à deux-roues, comprennent une poignée de frein 18 et un maître cylindre 20 qui constitue un réservoir pour le fluide hydraulique.

De façon connue, les moyens 14 de freinage peuvent être du type frein à disque comme illustrée sur la figure 1, ou du type frein à tambour.

Dans le cas d'un frein à disque, les moyens 14 de freinage comprennent un étrier 22 muni de plaquettes 24 disposées de part et d'autre d'un disque 26 solidaire d'une roue non représentée.

Selon l'invention, le dispositif 10 de freinage comprend en outre des moyens 28 de régulation de la pression du fluide hydraulique du circuit qui sont interposés entre les moyens 12 de commande et les moyens 14 de freinage, plus précisément entre l'étrier 22 et le flexible 16.

Ces moyens 28 de régulation permettent de limiter la pression du fluide hydraulique en dessous d'un seuil prédéterminé, et assistent de cette façon le conducteur lors du freinage, sans que celui-ci ait à agir sur la poignée de frein à la façon d'un pilote professionnel.

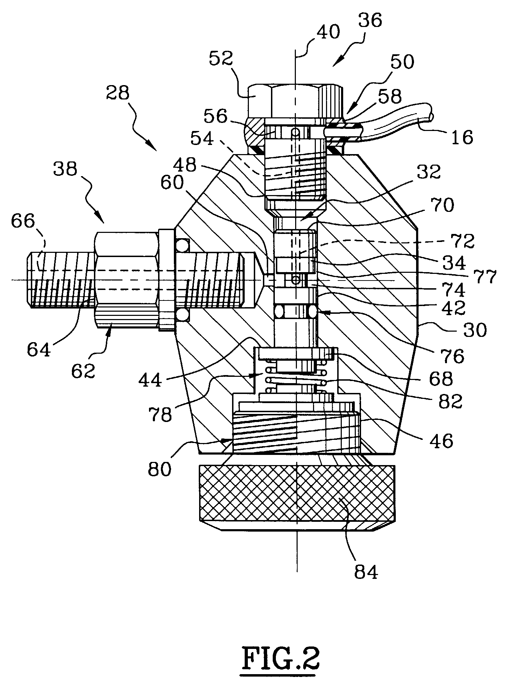

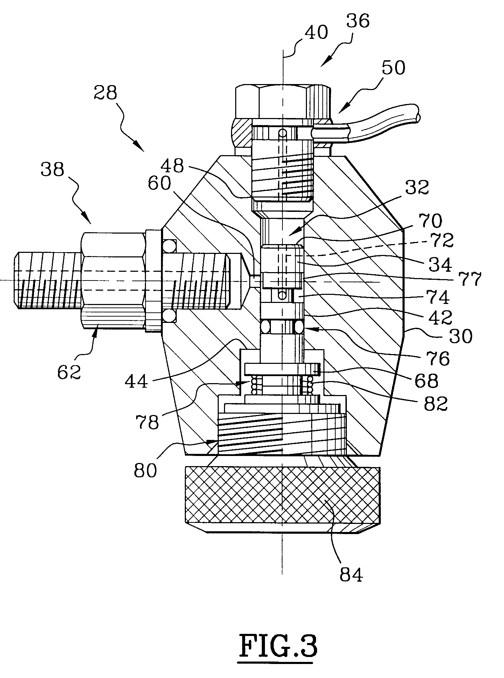

Les moyens 28 de régulation, appelés dans la suite de la description régulateur, sont représentés en détail sur les figures 2 et 3.

Le régulateur 28 comprend un corps 30 avec une chambre 32 dans laquelle peut coulisser un piston 34, une arrivée 36 de fluide hydraulique et une sortie 38 de fluide.

Le corps 30 en forme sensiblement de tonneau d'axe longitudinal 40 comprend un perçage, coaxial à l'axe 40, débouchant sur la partie inférieure du corps 30. Ce perçage comprend un alésage 42 lisse, délimité par un épaulement 44, dans sa partie centrale, et un alésage fileté 46 dans sa partie débouchante.

L'arrivée 36 du fluide, disposée sur la face supérieure du corps 30, comprend un conduit d'arrivée 48, de préférence coaxial à l'axe 40, qui débouche en partie supérieure de l'alésage 42, et des moyens 50 de connexion qui permettent d'assurer la continuité du circuit hydraulique de manière étanche entre le flexible 16 et le conduit 48.

Selon un mode de réalisation illustré sur la figure 2, les moyens 50 de connexion comprennent une vis 52, qui se visse dans le conduit d'arrivée 48, munie d'un conduit 54 qui débouche d'une part à l'extrémité de la vis et d'autre part dans une gorge 56 réalisée sur la périphérie de la vis sensiblement sous sa tête, et un oeil 58, fixé à l'extrémité du flexible 16, coaxial à la vis et disposé sous la tête de la vis 52 au niveau de la gorge 56.

La sortie 38 du fluide, disposée sur le flanc du corps 30, comprend un conduit de sortie 60 qui débouche dans le flanc de l'alésage 42 au droit du piston 34, de préférence perpendiculaire à l'axe 40, et des moyens 62 de connexion qui permettent d'assurer la continuité du circuit hydraulique de manière étanche entre le conduit de sortie 60 et l'étrier 22.

Selon un mode de réalisation illustré sur la figure 2, les moyens 62 de connexion comprennent un raccord 64, muni d'un conduit 66 qui débouche à chaque extrémité dudit raccord 64, et qui se visse d'une part dans le conduit de sortie 60 et d'autre part sur l'étrier 22.

Le piston 34, de forme sensiblement cylindrique, de diamètre ajusté à l'alésage 42, comprend à une première extrémité une collerette 68 susceptible de prendre appui contre l'épaulement 44 de l'alésage 42, et à l'autre extrémité une face supérieure 70 sensiblement perpendiculaire à l'axe 40.

Ainsi, la chambre 32 constituée par l'alésage 42 est délimitée par la face supérieure 70 du piston 34, et par la vis 52 des moyens 50 de connexion de l'arrivée du fluide.

Le piston 34 comprend en outre un conduit 72 qui débouche d'une part sur la face supérieure 70, et d'autre part sur la périphérie dudit piston dans une gorge 74, et des moyens 76 d'étanchéité, pour assurer l'étanchéité de la chambre 32, constitués par un joint torique qui se loge dans une gorge réalisée sur la périphérie du piston entre la collerette 68 et la gorge 74.

Cette gorge 74 est prolongée par un jeu 77, ménagé entre le piston 34 et l'alésage 42, susceptible de réaliser un étranglement entre le conduit 72 du piston et le conduit de sortie 60.

Le piston 34 peut osciller dans l'alésage 42 entre deux positions, une première position dite passante, illustrée sur la figure 2, dans laquelle la collerette 68 du piston 34 est en appui contre l'épaulement 44 de l'alésage 42, et le conduit 72 du piston se trouve au droit du conduit de sortie 60, et une seconde position dite régulée, illustrée sur la figure 3, dans laquelle la collerette 68 du piston 34 n'est plus en appui contre l'épaulement 44 de l'alésage 42, et le conduit 72 du piston communique par l'étranglement 77 avec le conduit de sortie 60.

Ainsi, lorsque la pression du fluide hydraulique dans la chambre 32 est inférieure à la pression de seuil, le piston 34 est dans la position passante, le conduit 72 permet alors l'écoulement du fluide du conduit d'arrivée 48 vers le conduit de sortie 60.

Dès que la pression du fluide dans la chambre 32 atteint la pression de seuil, le piston 34 se translate dans l'alésage 42 et occupe la position régulée, le conduit 72 communique de façon restreinte avec le conduit de sortie 60.

Le régulateur 28 comprend en outre des moyens 78 de rappel afin de maintenir le piston 34 dans la position passante et des moyens 80 de réglage de la pression de seuil.

Les moyens 78 de rappel sont réalisés par un ressort de compression 82 qui est disposé entre la collerette 68 du piston et une vis de tarage 84 qui se visse dans l'alésage fileté 46 du corps 30.

La vis de tarage 84 constitue également les moyens 80 de réglage de la pression de seuil en comprimant plus ou moins le ressort de compression 82.

Le fonctionnement du dispositif de freinage équipé du régulateur de pression selon l'invention est maintenant décrit au regard des figures 1, 2, et 3.

Lorsque le conducteur décide de freiner il agit sur les moyens 12 de commande de frein. Dès lors, la pression du fluide hydraulique du circuit de freinage augmente proportionnellement à l'effort qu'exerce le conducteur sur les moyens 12 de commande.

Dans le cas illustré sur la figure 1, l'étrier de frein provoque le serrage du disque 26 lié à la roue entre les plaquettes 24. L'effort de serrage est sensiblement proportionnel à la pression du fluide hydraulique du circuit de freinage et donc à l'effort qu'exerce le conducteur sur les moyens 12 de commande.

Afin d'empêcher le blocage de roue et donc la perte d'adhérence, la pression de seuil est réglée pour être inférieure à la pression maximale qui correspond à la pression obtenue au moment du blocage de roue.

Ainsi, dès que la pression du fluide dans le circuit de freinage, et plus précisément dans la chambre 32, atteint la pression de seuil, le piston 34 se translate jusqu'à la position régulée à l'encontre de l'effort des moyens 76 de rappel. Cette translation du piston 34 provoque l'augmentation du volume de la chambre 32, et donc la baisse de la pression du fluide dans le circuit de freinage.

Ainsi, même si le conducteur maintient son action sur les moyens 12 de commande, les moyens 14 de freinage relâche l'action de serrage sur le disque.

Lorsque le piston 34 a atteint la position régulée, le conduit 72 communique de façon restreinte avec le conduit de sortie 60.

Dès que l'effort exercé par les moyens 78 de rappel devient supérieur à l'effort exercé par la pression du fluide à l'intérieur de la chambre 32, le piston revient en position passante.

Dès lors, la pression du fluide dans le circuit de freinage augmente de nouveau, et les moyens 14 de freinage provoque de nouveau le serrage du disque 26.

Ainsi, le freinage est obtenu par une succession de cycle où le régulateur 28 occupe successivement les positions passante et régulée, ce qui permet d'éviter le blocage de roue.

Par ailleurs, si le conducteur freine de façon brusque, le régulateur 28 amortit et empêche la propagation vers les moyens 14 de freinage de l'onde de pression ainsi créée, et susceptible d'engendrer le blocage de roue, grâce d'une part au piston 34 qui peut se translater, et d'autre part à l'étranglement obtenu entre le conduit 72 du piston et le conduit de sortie 60 au moment de la translation du piston 34.

Bien entendu, le dispositif de freinage de l'invention n'est pas limité aux modes de réalisation représentés et décrits ci-dessus.

Ainsi, les moyens 12 de commande peuvent être différents, et être réalisés par une pédale.

De même, chaque roue peut être équipée d'un dispositif de freinage indépendant équipé d'un régulateur ou bien chaque roue peut être équipée de moyens de freinage indépendants, équipés chacun d'un régulateur, commandés tous par la même commande, un répartiteur permettant de répartir l'écoulement du fluide hydraulique vers les différents moyens de freinage.

Enfin les moyens de connexion peuvent être différents, ainsi les moyens 50 de connexion peuvent être réalisés par vissage du flexible 16 dans le conduit d'arrivée 48.

## Revendications

1. Régulateur de pression pour circuit hydraulique, utilisé notamment dans les dispositifs de freinage de véhicules à deux-roues, caractérisé en ce qu'il comprend un alésage (42) de forme cylindrique, un piston (34) qui est susceptible de coulisser dans l'alésage (42) en délimitant une première chambre (32) et qui comprend un conduit (72) débouchant d'une part sur la face (70) orientée vers la chambre (32) et d'autre part sur le flanc du piston (34), un conduit d'arrivée (48) de fluide qui débouche dans ladite chambre (32), un conduit de sortie (60) de fluide qui débouche dans le flanc dudit alésage (42) sensiblement au droit du piston (34), le piston (34) étant susceptible d'osciller entre deux positions en fonction de la pression du fluide à l'intérieur de la chambre (32), une première position dite passante, lorsque ladite pression est inférieure à une pression de seuil, dans laquelle le conduit (72) communique avec le conduit de sortie (60), et une seconde position dite régulée, lorsque la pression du fluide atteint ladite pression de seuil, qui engendre une augmentation du volume de la chambre (32), et dans laquelle le conduit (72) communique par un étranglement (77) avec le conduit de sortie (60), des moyens (78) de rappel étant prévus afin de maintenir le piston (34) en position passante.

2. Régulateur de pression selon la revendication 1, caractérisé en ce qu'il comprend des moyens (80) de réglage de la pression de seuil.

3. Régulateur de pression selon la revendication 2, caractérisé en ce que les moyens (78) de rappel comprennent un ressort (82) interposé entre le piston (34) et une vis de tarage (84), et en ce que ladite vis de tarage (84) en comprimant plus ou moins le ressort (82) constitue les moyens (80) de réglage de la pression de seuil.

4. Dispositif de freinage d'un véhicule à deux-roues équipé du régulateur de pression selon l'une quelconque des revendications précédentes, comprenant des moyens (12) de commande reliés à des moyens (14) de freinage disposés au niveau d'au moins une roue par un circuit hydraulique (16), caractérisé en ce que le régulateur de pression est disposé entre les moyens (12) de commande et les moyens (14) de freinage.

5. Dispositif de freinage d'un véhicule à deux-roues selon la revendication 4, caractérisé en ce que le régulateur de pression comprend des moyens (62) de connexion pour relier de façon étanche le conduit de sortie (60) directement aux moyens (14) de freinage et des moyens (50) de connexion pour relier de façon étanche le conduit d'arrivée (48) au circuit hydraulique (16).
